# EUROPÄISCHE PATENTANMELDUNG

(11) **EP 2 732 965 A1**
(43) Veröffentlichungstag der Anmeldung: **21.05.2014**
(21) Anmeldenummer: 13193706.2
(22) Anmeldetag: 20.11.2013
(51) Int. Cl.: B32B 5/02, B32B 5/06, B32B 5/22, B32B 5/24, B32B 15/14, B32B 27/12, B44F 1/08, B44F 1/06, B60R 13/02

(54) **Lichtdurchlässiges Formteil**

(30) Priorität: 20.11.2012 DE 102012111187
(71) Anmelder: Marquardt, Marko, 42287 Wuppertal (DE)
(72) Erfinder: Marquardt, Marko, 42287 Wuppertal (DE)
(74) Vertreter: Bals, Rüdiger

(57) **Zusammenfassung**

Die Erfindung betrifft ein Formteil (10), insbesondere für ein Kraftfahrzeug, aufweisend einen Träger (1), mit einer Dekorschicht (3), insbesondere einem Textil oder einer textilen Schicht, welche zumindest bereichsweise auf dem Träger (1) angeordnet ist, und mit zumindest einer Zwischenschicht (2, 4), welche zumindest abschnittsweise auf dem Träger (1) und/oder der Dekorschicht (3) angeordnet ist, und der Träger zumindest bereichsweise lichtdurchlässig ist.

Erfindungsgemäß ist vorgesehen, dass eingeleitetes Licht aus der gegenüberliegenden Seite des Formteils (10) austritt.

## Beschreibung

Die Erfindung betrifft ein Formteil, insbesondere für ein Kraftfahrzeug, gemäß dem Oberbegriff des Anspruchs 1. Des Weiteren betrifft die Erfindung ein Verfahren gemäß dem Oberbegriff des Anspruchs 15. Das Formteil weist einen Träger mit einer Dekorschicht aus insbesondere einem Textil oder einer textilen Schicht auf. Die Dekorschicht ist zumindest bereichsweise auf dem Träger angeordnet und mit zumindest einer Zwischenschicht versehen, welche zumindest abschnittsweise auf dem Träger und/oder der Dekorschicht angeordnet ist. Der Träger ist dabei zumindest bereichsweise lichtdurchlässig.

Aus dem Stand der Technik sind Verkleidungsteile, insbesondere für den Innenraum von Kraftfahrzeugen, bekannt, bei welchen die Verkleidung aus einem Träger aus Kunststoff, insbesondere mit einer zusätzlichen Schaumschicht, weichen Schicht besteht, die mit einer u. a. textilen Oberflächenbeschichtung versehen sind. Eine derartige textile Beschichtung dient dabei einer Schutzfunktion der Fahrzeuginsassen im Fahrzeuginnenraum, sowie einer geringen Geräuschentwicklung (WO 2006/101959 A1 und DE 10 2007 059 233 A1). Allerdings sind aus dem Stand der Technik keine beleuchteten Formteile, insbesondere der Innenverkleidung eines Kraftfahrzeugs und kein Verfahren zur Herstellung derartiger Formteile bekannt.

Ausgehend von dem zuvor erwähnten Stand der Technik ist es daher Aufgabe der vorliegenden Erfindung ein Formteil, sowie ein Verfahren zu dessen Herstellung zu schaffen, welches derart ausgestaltet ist, dass eine Dekorschicht einem optisch gefälligen Eindruck, insbesondere eines Innenraums von Kraftfahrzeugen, dient. Ferner soll dieser gefällige Eindruck kostengünstig und einfach zu erreichen sein. Zusätzlich soll die Lichtdurchlässigkeit verbessert des Formteils sowie der Dekorschicht werden.

Die Lösung der Aufgabe wird durch die in Anspruch 1 und Anspruch 15 angegebenen Maßnahmen erreicht, denen folgende Bedeutung zukommt. In den abhängigen Vorrichtungs-, und Verfahrensansprüchen sind bevorzugte Weiterbildungen der Erfindung aufgeführt. Merkmale, die zum erfindungsgemäßen Formteil offenbart werden, gelten dabei auch für das erfindungsgemäße Verfahren und umgekehrt. Vorteilhafte Ausgestaltungen des erfindungsgemäßen Formteils sowie dem erfindungsgemäßen Verfahren sind in den abhängigen Ansprüchen aufgeführt.

Kern der Erfindung ist, dass in oder bei einer ersten Seite des Formteils eingeleitetes Licht aus einer gegenüberliegenden, zweiten Seite des Formteils austritt, wobei dadurch eine angenehme Atmosphäre in der Umgebung des Formteils geschaffen werden kann. Das Formteil kann eingeleitete Lichtstrahlen (durch die Dekorschicht) vor dem Austreten derart modifizieren, dass vielfältige Effekte erzeugt werden. Es kann erfindungswesentlich erreicht werden, dass Licht in verschiedenen Intensitäten und Farben aus dem Formteil austritt. Durch die mögliche verschiedenartige Beschaffenheit der einzelnen Bestandteile des Formteils ist dieses sehr flexibel in der Herstellung, was eine einfach und kostengünstige Herstellung ermöglicht.

Vorteilhafterweise ist die Dekorschicht durch die Auftragung der Zwischenschicht transparenter als ohne diese Zwischenschicht. Transparenz wird dabei (auch im Sinne von Transluzenz) als Lichtdurchlässigkeit pro Fläche definiert. Die Angaben erfolgen in Prozent, wobei das eingestrahlte Licht 100 % entspricht. Je nach Lichtdurchlässigkeit, also Dicke, Dichte, Färbung und ähnlichen Parametern, werden mehr oder weniger Lichtstrahlen reflektiert bzw. absorbiert und weniger Licht tritt durch die Dekorschicht hindurch, so dass die Transparenz durch den Einsatz der Dekorschicht abnimmt. Dabei ist es grundsätzlich so, dass desto dicker, dichter oder mehr gefärbt die Dekorschicht ist, desto weniger Licht durch diese hindurchtreten kann. Der Absorptionsgrad des Lichts wird dadurch gemessen, dass die Lichtintensität an der Lichtquelle auf 100 % definiert wird. Sobald kein Licht durch die Dekorschicht hindurchtreten kann, entspricht die Lichtintensität 0 %. Relativ dazu werden die prozentualen Angaben der Lichtintensität gemessen. Folglich liegt bei einer austretenden Lichtintensität von 0 % auch keine Transparenz (also ebenfalls 0%) vor. Die zusätzliche Auftragung der Zwischenschicht auf die Dekorschicht bewirkt dabei überraschenderweise einen prozentualen Anstieg der Lichtintensität bzw. eine Verbesserung der Transparenz nach dem Durchtritt des Lichtes durch die Dekorschicht. Dadurch ist es möglich, verschiedenartige Dekorschichten einzusetzen, um vielfältige Lichteffekte zu erzeugen.

Unter Transparenz wird im Sinne der vorliegenden Anmeldung grundsätzlich die Lichtdurchlässigkeit eines Stoffes oder einer Schicht (hier des Formteils und/oder der jeweiligen Schichten) verstanden, wobei unter dem Formteil bzw. der Trägerschicht liegende Objekte nicht klar erkennbar sein müssen (Bild- oder Blickdurchlässigkeit), jedoch sein könnten. Insofern werden die beiden Begriffe Transparenz und Transluzenz als Synonym verwendet.

Bei diversen Versuchen hat sich gezeigt, dass eine fast lichtundurchlässig Dekorschicht plötzlich transparenter bzw. lichtdurchlässiger wird, sobald die zusätzliche Zwischenschicht auf die Dekorschicht aufgetragen wird. Hierbei verbesserte sich die Transparenz bis zu 70 %, so dass die austretende Lichtintensität nach dem Durchtritt des Lichtes durch die Dekorschicht deutlich erhöht war. Gerade wenn die Zwischenschicht die Dekorschicht, insbesondere stofflich durchdringt, da diese im quasi flüssigen bzw. fließfähigen Zustand (gemeint ist: im nicht festen Zustand, z.B. als (Kunst-, oder Epoxy-)Harzschicht) aufgetragen ist, verbessert sich die Lichtdurchlässigkeit. Dieser Effekt lässt sich dadurch erklären, dass die Zwischenschicht die Dekorschicht zumindest teilweise beim Auftragen durchsetzt und die eintretenden Lichtstrahlen in der Dekorschicht nun teilweise auch in die Zwischenschicht eindringen und durch diese durch die Dekorschicht geleitet werden, bis die Lichtstrahlen hinter der Dekorschicht aus der zusätzlichen Zwischenschicht wieder austreten können. Dabei werden die Lichtstrahlen in der zusätzlichen Zwischenschicht zum größten Teil reflektiert und nicht wie bei der Dekorschicht absorbiert. Selbstverständlich ist die zusätzliche Zwischenschicht selbst lichtdurchlässig bzw. transparent ausgestaltet.

Zweckmäßigerweise ist auf dem Träger eine erste Zwischenschicht angeordnet, auf welcher die Dekorschicht aufgebracht werden kann. Es ist ebenfalls denkbar, dass zwischen der Dekorschicht und der optionalen Schutzschicht eine zweite Zwischenschicht aufgetragen werden kann. Im Falle der Verwendung einer ersten Zwischenschicht, kann diese dazu vorgesehen sein, die Dekorschicht stoffschlüssig auf dem Träger zu halten bzw. zu fixieren. Ein weiterer denkbarer Vorteil der ersten Zwischenschicht ist, dass diese in einem direkten Kontakt zur Dekorschicht stehen kann. Eine Verbindung der ersten Zwischenschicht mit der Dekorschicht kann die Dekorschicht transparenter machen. Optimal ist es, wenn eine oder mehrere Zwischenschichten mit der Dekorschicht interagieren. Im Fall der Verwendung einer zweiten Zwischenschicht kann diese dazu vorgesehen sein, auf der vom Träger abgewandten Seite eine stoffschlüssige Verbindung mit der Dekorschicht einzugehen. Die zweite Zwischenschicht würde so ebenfalls in einem Kontakt zu der zweiten Zwischenschicht stehen können. Eine Verbindung der zweiten Zwischenschicht mit der Dekorschicht kann diese ebenfalls transparenter machen. In einer denkbaren Ausgestaltung ist es möglich, dass sowohl eine erste als auch eine zweite Zwischenschicht verwendet werden. Da es sich bei der Dekorschicht in der Regel um eine textile Schicht handelt, ist es denkbar, dass eine der beiden oder beide Zwischenschichten nicht nur eine stoffschlüssige Verbindung mit der Dekorschicht eingehen, sondern sich mit dieser zu einer Schicht verbinden, die insbesondere stoffschlüssig verbunden ist.

Vorteilhafterweise ist die erste Zwischenschicht eine, insbesondere lichtdurchlässige Harzschicht. Diese Harzschicht ist bevorzugt ungefärbt, damit die Lichtdurchlässigkeit verbessert wird. Ferner ist es erfindungsgemäß vorgesehen, dass auch die zweite Zwischenschicht eine, insbesondere lichtdurchlässige Harzschicht ist. Die erste und zweite Zwischenschicht können vorzugsweise das gleich Material aufweisen, wodurch eine optimal Verbindung erzielbar ist, so dass die Dekorschicht einen besonders festen Halt auf dem Träger bzw. dem Formteil erreicht. In diesem Fall kann man auch davon reden, dass die Dekorschicht eingebettet in den beiden Zwischenschichten ist. Es ist ferner denkbar, die Harzschichten als adhäsive Verbundstoffe einzusetzen, die die Dekorschicht mit dem Träger und die Dekorschicht mit der Schutzschicht verbinden können. Ferner ist es ebenfalls denkbar, die Harzschichten zur Oberflächenveredelung und Oberflächenversiegelung zu nutzen. Ein weiterer Vorteil der Harzschichten kann sein, dass diese eine Formherstellung ermöglichen, insbesondere bei einem Träger, der ebenfalls vorgeformt ist. Vorteilhafterweise können die eingesetzten Harze mit einem Härter vermischt werden, wodurch es zu einer Reaktion der Harzschichten, insbesondere zu einer Aushärtung, kommen kann. Bei einer denkbaren Aushärtung steigt die Viskosität der Harzschicht an. Andererseits ist es ebenfalls möglich, die eingesetzten Harze mit einem Weichmacher zu vermischen, um die Schichten flexibel zu halten. Möglicherweise ist es denkbar, die Dekorschicht mit den Harzschichten zu verbinden, um eine Formherstellung der Dekorschicht zu erreichen. Vorteilhafterweise kann diese Formerstellung über ein Gussverfahren erfolgen. Dabei sind die verschiedensten Harztypen, wie beispielsweise Polyesterharze, Epoxidharze, insbesondere Formharze und Laminierharze, oder Phenolformaldehydharze denkbar. Eine Verwendung einer oder mehrerer Zwischenschichten kann das Formteil und insbesondere die Dekorschicht u. a. vor Korrosion schützen, zu einer Festigkeit beitragen oder auch eine Flexibilität beibehalten, sowie eine chemische Beständigkeit erzeugen. Insbesondere für den Innenraum von Fahrzeugen ist es denkbar, dass Zwischenschichten zu einer Rutschfestigkeit der Oberfläche des Formteils führen können.

Ferner ist es vorgesehen, dass die erste Zwischenschicht eine Dicke von 0,05 bis 1 mm aufweist. Auch die zweite Zwischenschicht kann möglicherweise eine Dicke von 0,05 bis 1 mm aufweisen. Es ist ebenfalls denkbar, dass eine oder beide Schichten bevorzugt eine Dicke von 0,1 bis 0,8 mm und besonders bevorzugt von 0,2 bis 0,4 mm aufweisen. Je dünner die jeweilige Zwischenschicht aufgetragen wird, desto geringer ist das Gewicht des Formteils. Insbesondere bei Kraftfahrzeugen kann ein geringes Gewicht zu einer erheblichen Kosteneinsparung führen. Auch der Verbrauch der eingesetzten Substanzen kann durch eine Reduzierung der Schichtdicke eingespart werden.

Optimal ist es, wenn die Schutzschicht zumindest bereichsweise auf der vom Träger abgewandten Seite der Dekorschicht aufgetragen ist. Es ist ebenfalls denkbar, dass die Schutzschicht auch auf der vom Träger abgewandten Seite der zweiten Zwischenschicht aufgetragen ist. Die Schutzschicht kann dazu dienen, das Formteil, insbesondere die Dekorschicht, vor Umwelteinflüssen wie UV-Licht, Feuchtigkeit, Schmutzpartikel etc. zu schützen. Die Schutzschicht kann alle weiteren auf den Träger aufgebrachten Schichten optimalerweise versiegeln und damit eine längere Lebensdauer gewährleisten. Dabei ist es besonders einfach und zeitsparend, wenn sich die Schutzschicht als eine Lackschicht, insbesondere eine Kristalllack- oder eine Softlackschicht, auftragen lässt. Es ist dabei u. a. denkbar, dass die Schutzschicht dabei aufgesprüht, aufgegossen oder aufgetropft wird.

Vorteilhafterweise weist die Schutzschicht eine Dicke von 100 µm bis 1 mm auf. Es ist ebenfalls denkbar, dass die Schutzschicht bevorzugt eine Dicke von 0,2 bis 0,8 mm und besonders bevorzugt von 0,3 bis 0,5 mm aufweist. Je dünner die jeweilige Schutzschicht aufgetragen wird, desto geringer ist das Gewicht des Formteils. Insbesondere bei Kraftfahrzeugen kann ein geringeres Gewicht zu einer erheblichen Kosteneinsparung führen. Auch der Verbrauch der eingesetzten Substanzen kann durch eine Reduzierung der Schichtdicke eingespart werden. Es ist ferner denkbar, dass mehrere Schutzschichten übereinander aufgetragen werden, um den Schutz des Formteils weiter zu erhöhen.

Um eine Lichtdurchlässigkeit des Formteils zu gewährleisten, ist es empfehlenswert, dass die Schutzschicht sowie die erste und die zweite Zwischenschicht zumindest teilweise transparent und/oder transluzent sind. Die Transparenz beschreibt den Grad der Lichtdurchlässigkeit. Durch eine zumindest bereichsweise ausgestaltete Transparenz ist es möglich, eine angenehme Atmosphäre zu schaffen, die durch eine Beleuchtung (insbesondere des Innenraums von Kraftfahrzeugen) erzeugt wird. Direktes Licht aus einer ungeschützten Lichtquelle wirkt oft anonym und steril. Eine indirekte, gedämpfte Beleuchtung kann hingegen eine wohlige Atmosphäre schaffen und dem Nutzer ein angenehmes Gefühl vermitteln. Durch die verschiedenen denkbaren Gestaltungsmöglichkeiten der Dekorschicht ist es ebenfalls möglich, ein spezielles Design des Formkörpers zu schaffen. Durch eine Transparenz der Schutzschicht und der Zwischenschichten, kann die Dekorschicht optimalerweise von außen sichtbar gemacht werden.

Um die Formteile jeglicher möglicher Verwendung anzupassen, ist es denkbar, dass die verschiedenen Schichten, wie die Schutzschicht und die Zwischenschicht zumindest bereichsweise flexibel oder elastisch ausgestaltet sind. Durch eine flexible oder elastische Ausgestaltung können die Formteile an sämtlichen denkbaren Stellen eingesetzt werden. Auch eine einheitliche Produktion ist durch eine erhaltene Elastizität oder Flexibilität denkbar, da die Formteile universell zu benutzen sind. Um die Elastizität oder Flexibilität auch im ausgehärteten Zustand der verschiedenen Schichten beizubehalten, können diesen bei der Produktion Weichmacher beigemischt werden. Weichmacher sind u. a. Esteröle, Harze oder Kampfer. Durch den Einsatz der Weichmacher ist es denkbar, dass der thermoplastische Bereich der Schichten hin zu niedrigeren Temperaturen verschoben werden kann. Weiterhin ist es denkbar, dass die Elastizität durch eine Wechselwirkung von polaren Gruppen mit dem Polymeren zu verschiedenen Schichten erreicht werden kann.

Optimal ist es, wenn die Dekorschicht aus verschiedenen Fasern aufgebaut ist. Als Fasern sind dafür synthetische und auch Naturfasern sowie metallische Fasern denkbar. Bei der Dekorschicht kann es sich vorteilhafterweise um eine textile Schicht handeln. Jegliche Arten von Textilien, auch metallische Textilien, und/oder Verbundtextilien aus unterschiedlichen Fasern sind dabei denkbar. Die verschiedenen Textilien können dabei sowohl gewebt als auch gewirkt sein. Möglicherweise kann die Dekorschicht bedruckt oder gefärbt ausgestaltet sein. Durch eine Bedruckung oder Einfärbung ist jegliches Design erdenklich. Auch ein personalisiertes, individuelles Design ist somit möglich, z. B. durch einen Schriftzug und/oder ein Logo oder dergleichen. Eine Dekorschicht aus textilen Stoffen ist vorteilhafterweise kostengünstig herzustellen. Auch eine lange Lebensdauer kann bei textilen Stoffen durch die Einbettung in der oder den Zwischenschichten erreicht werden. Insbesondere ist es denkbar, dass eine lange Lebensdauer durch eine Interaktion mindestens einer Zwischenschicht und einer eventuellen zusätzlichen Versiegelung mit mindestens einer Schutzschicht möglich ist.

Vorteilhafterweise ist es denkbar, dass die Dekorschicht zumindest bereichsweise mehrschichtig ausgestaltet ist. Durch eine mehrschichtige Ausgestaltung kann eine höhere Stabilität erreicht werden. Weitere Möglichkeiten einer Personalisierung des Designs sind so ebenfalls erdenklich. Es ist ebenfalls möglich, dass verschiedene Lagen an Textilien übereinander verarbeitet werden. Eine erhöhte Vielfältigkeit der damit zu erreichenden Lichteffekte ist ebenfalls denkbar. Auch verschiedene Transparenzen in unterschiedlichen Bereichen der Dekorschicht können über eine Mehrschichtigkeit erreicht werden. optimalerweise werden die verschiedenen Dekorschichten über eine Zwischenschicht miteinander verbunden.

Möglicherweise kann der Träger des Formteils aus verschiedenen Stoffen geformt sein. Es ist denkbar, dass der Träger zumindest teilweise Carbon, Metall, Kunststoff, Holz oder Hartschaum aufweisen kann. Auch kann der Träger Verbundstoffe (z.B. glas- oder kohlenstofffaserverstärke Kunststoffe), die insbesondere vorgeformt sind, aufweisen. Die verschiedenen Materialien können nach deren verschiedenen Eigenschaften, je nach dem Einsatzort des Trägers, gewählt werden. Das Gewicht und die Formbarkeit können bei der Entscheidung eine wesentliche Rolle spielen.

Weiterhin ist es denkbar, dass der Träger vorgeformt ist, bevor dieser mit der Dekorschicht versehen wird oder verbaut wird. Vorgeformte Träger können dabei den Vorteil aufweisen, dass diese kostengünstig in einer Vielzahl produziert werden können. Ebenfalls ist es denkbar, dass die Dichte des Trägers verschieden, vorzugsweise je nach Einsatzort, ausgestaltet wird. Der Einsatz des Trägers ist u. a. als Träger von Außenspiegeln in einem Kraftfahrzeug, als Innenverkleidung in einem Kraftfahrzeug, als Lampenverkleidung, als Lampenschirm oder von Armaturen, insbesondere in Kraftfahrzeugen, denkbar. Je nach Größe und Material des Trägers ist eine verschiedene Dichte möglich. Handelt es sich bei dem Träger beispielsweise um Kunststoff ist eine Dichte von 800 bis 2.200 kg/m³ optimal. Handelt es sich beispielsweise um Carbon, was eine Dichte von 1 bis 2,5 g/cm³ optimal. Vorteilhafterweise ist der Träger dabei zumindest bereichsweise transparent ausgestaltet. Eine zumindest teilweise Transparenz ist optimal, da eingeleitetes Licht somit an der anderen Seite des Formteils wieder austreten kann. Eine Transparenz kann dadurch erreicht werden, dass das verwendete Material an sich zumindest teilweise transparent ist, oder dass nichttransparentes Material über lichtdurchlässige Öffnungen verfügt, durch welche eingeleitetes Licht hindurchtreten kann.

Vorteilhafterweise werden die Formteile bei Kraftfahrzeugen eingesetzt. Der Einsatz ist sowohl im Innen als auch im Außenbereich von Kraftfahrzeugen möglich. Als möglicher Einsatzort im Außenbereich kommen u. a. der Außenspiegel, der Kühlergrill, die Motorhaube, Dachelemente oder die Kofferraumverkleidung in Betracht. Im Innenbereich kommen u. a. das Lenkrad, die Armaturen, Armlehnen, eine Türinnenverkleidung, die Mittelkonsole und Instrumentenanzeigen in Betracht. Weiterhin ist es denkbar, das Formteil unabhängig vom Fahrzeugbau im Möbelbau einzusetzen. Insbesondere ist eine Verwendung bei Leuchtmitteln denkbar. Möglicherweise können allerdings auch Tische, Stühle und Regale oder zumindest Teile dieser Möbelstücke mit dem Formteil ausgestaltet sein. Ein weiterer Anwendungsbereich ist im Bauwesen denkbar.

Vorteilhafterweise weist die Transparenz des Formteils 10 bis 90 % auf. Es ist ebenfalls denkbar, dass das Formteil bevorzugt eine Transparenz von 30 bis 80 % und besonders bevorzugt von 50 bis 75 % aufweist. Je transparenter das Material des Trägers ist, und je weniger Schichten auf dem Träger aufgebracht werden, desto transparenter ist das gesamte Formteil. Ebenfalls ist eine Färbung der Dekorschicht als maßgeblich für die Transparenz denkbar. Insbesondere bei der Verwendung im Innenraum kann eine Transparenz auf die gewünschte Atmosphäre abgestimmt werden. Je geringer die Transparenz ist, desto weniger Licht tritt von der Strahlungsquelle durch das Formteil hindurch. Eine optimale Anpassung der Atmosphäre über den Grad der Transparenz ist somit denkbar. Ebenfalls ist es denkbar, dass die verschiedenen Parameter, wie beispielsweise das Material des Trägers, die Schichtdicke der Schichten, die Einfärbung der Dekorschicht, bewusst zur Herstellung einer bestimmten Transparenz herangezogen werden können. Eine individuelle Einstellung der gewünschten Atmosphäre ist damit möglich.

Das erfindungsgemäße Formteil muss nicht im Rahmen der Erfindung mit einer Lichtquelle ausgestattet sein, so dass auch nur die Dekorschicht ohne Lichtdurchsetzung in Anwendung kommen kann.

Vorteilhafterweise ist es denkbar, dass eine Stabilität des Formteils durch zumindest bereichsweises Aufbringen einer oder mehrerer Zwischenschichten, einer oder mehrerer Dekorschichten und einer oder mehrerer Schutzschichten verstärkt wird. Je mehr Schichten und je dicker die einzelnen Schichten verwendet werden, ist es denkbar, dass das Formteil stabiler ausgestaltet ist. Es ist ferner denkbar, dass die Flexibilität und Elastizität dadurch abnehmen kann. Es ist ebenfalls denkbar, dass die verschiedenen Schichten einen Einfluss auf die Transparenz des Formteils ausüben können.

Optimal ist es, wenn unterhalb des Trägers auf der ersten Seite de Formteils eine Lichtquelle angeordnet ist. Weiterhin ist es denkbar, dass auch innerhalb der Trägerschicht und/oder einer ersten Seite des Formteils eine Lichtquelle angeordnet sein kann. Bei der Lichtquelle kann es sich um wenigstens eine LED oder auch um herkömmliche Glühbirnen (Energiesparlampen) handeln. Es ist weiterhin denkbar, Leuchtfolie als Lichtquelle einzusetzen. Ferner können möglicherweise Lichtleiter als Lichtquelle eingesetzt werden, um spezielle Designmöglichkeiten auszunutzen. Weiterhin ist es denkbar, dass Harz eingesetzt werden kann, welches als Lichtleiter dient. Auch kann diese Funktion ein Plexiglas ausüben. Weiterhin ist es denkbar, Glasfasern mit in das Textilgewebe einzuarbeiten (einweben) und als Lichtleiter zu nutzen. Die verschiedenen Lichtquellen können eingesetzt werden um verschiedene Lichtstärken, Strahlungsarten und Wellenlängen auszustrahlen. Die verschiedenen Möglichkeiten verhelfen ebenfalls verschiedene, insbesondere personalisierte, Atmosphären zu schaffen.

In einer anderen Weiterbildung ist die Erfindung auf ein Verfahren gemäß Anspruch 15 gerichtet, das zur Herstellung des Formteils verschiedene Verfahrensschritte aufweist. In einem ersten Schritt wird das Aufbringen einer ersten Zwischenschicht auf den Träger vollzogen. Dieser Verfahrensschritt ist optional, da die Dekorschicht auch direkt auf den Träger aufgebracht werden kann, ohne dass eine erste Zwischenschicht sich zwischen dem Träger und der Dekorschicht befinden muss. In einem weiteren Schritt gemäß dem Verfahren, wird die Dekorschicht auf den Träger aufgebracht. Diese Aufbringung geschieht entweder direkt oder eine erste Zwischenschicht wird zwischen dem Träger und der Dekorschicht aufgebracht. Es ist jedoch erfindungswesentlich, dass mindestens eine Zwischenschicht auf die Dekorschicht aufgebracht wird. Dabei kann es sich um die erste oder aber auch um die zweite Zwischenschicht handeln, wobei die erste Zwischenschicht zwischen dem Träger und der Dekorschicht sich befindet und die zweite Zwischenschicht auf der vom Träger abgewandten Seite der Zwischenschicht aufgebracht wird. Es ist ebenfalls optional denkbar, dass eine Zwischenschicht auf der vom Träger abgewandten Seite der Dekorschicht aufgebracht wird. Die Schutzschicht kann dabei entweder direkt von der Dekorschicht oder auch auf der zweiten Zwischenschicht aufgebracht werden. Vorteilhafterweise ist die Reihenfolge der Verfahrensschritte variabel ausführbar. Es ist denkbar, dass die verschiedenen Schichten auf den Träger aufgebracht werden. Ferner ist es ebenfalls möglich, die verschiedenen Schichten auf die Dekorschicht aufzubringen. Ein anschließendes Verbinden mit dem Träger kann vorteilhafterweise ebenfalls anschließend durchgeführt werden. Die verschiedenen Schichten, insbesondere die Zwischenschichten, können dabei beispielsweise in einem Gussverfahren, durch Laminieren, Streichen, Sprühen und/oder Auftropfen auf den Träger aufgebracht werden. Zusätzlich kann das Formteil durch die kostengünstigen und einfach Materialien und die variablen Zusammenstellungen kostengünstig hergestellt werden.

Weitere Maßnahmen und Vorteile der Erfindung ergeben sich aus den Ansprüchen, der nachfolgenden Beschreibung und den Zeichnungen. In den Zeichnungen ist die Erfindung in mehreren Ausführungsbeispielen dargestellt. Es zeigen:
- Figur 1: eine schematische Darstellung der verschiedenen Schichten des Formteils,
- Figur 2: eine schematische Darstellung der verschiedenen Schichten des Formteils gemäß Figur 1, mit einer externen Lichtquelle,
- Figur 3: eine schematische Darstellung der verschiedenen Schichten des Formteils gemäß Figur 1, mit einer externen Lichtquelle und in die Trägerschicht integrierte Öffnung,
- Figur 4: eine schematische Darstellung der verschiedenen Schichten des Formteils gemäß Figur 1, mit einer in die Trägerschicht integrierten Lichtquelle und
- Figur 5: eine schematische Darstellung der verschiedenen Schichten des Formteils gemäß Figur 1, wobei die Zwischenschichten mit der Dekorschicht interagieren.

In den Figuren sind gleiche technische Merkmale mit dem gleichen Bezugszeichen versehen.

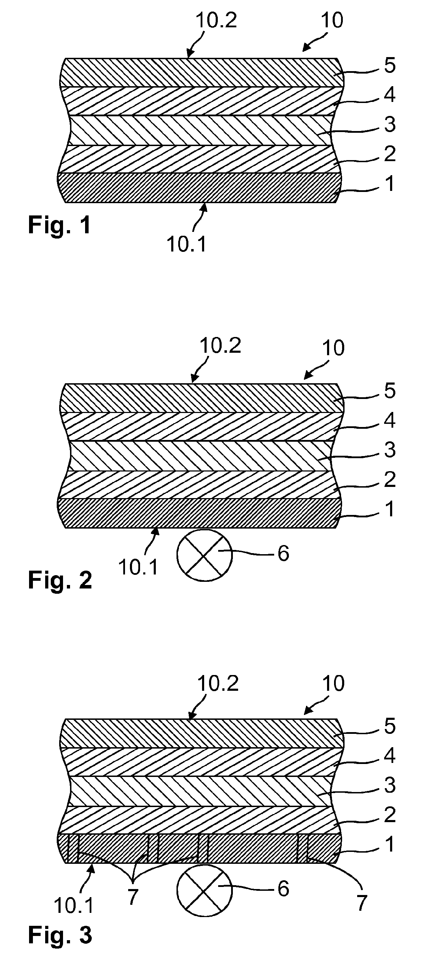

In Figur 1 ist das erfindungsgemäße Formteil 10 in einer Schnittansicht dargestellt. Der in dem Schnitt des Formteils dargestellt Träger 1 weist beispielsweise Kohlenstofffasern / Carbon auf. Er kann aber auch aus Kunststoff, Holz, Metall oder Hartschaum oder einem Verbundstoff hergestellt sein. Auf dem Träger 10 sind mehrere Schichten 2, 3, 4, 5 aufgebracht, wobei nicht alle Schichten 2, 3, 4, 5 in jedem Formteil 10 vorhanden sein müssen.

Die Schicht 2 gemäß Figur 1 ist eine erste Zwischenschicht 2. Die erste Zwischenschicht 2 kann auf den Träger aufgetragen sein. Die Zwischenschicht 2 ist vorteilhafterweise eine Harzschicht, welche durch den Zusatz von Weichmachern elastisch bzw. flexibel gehalten werden kann, oder durch den Zusatz von Härtern eine hohe Steifigkeit besitzen kann. Die erste Zwischenschicht 2 kann nur optional aufgetragen werden. Ferner können auch mehrere erste Zwischenschichten 2 aufgetragen sein. Auf der ersten Zwischenschicht 2 oder direkt auf dem Träger ist die Dekorschicht 3 aufgetragen. Die Dekorschicht 3 besteht aus einem Textil oder eine Textilschicht. Diese kann aus synthetischen oder Naturfasern bestehen und kann gewebt oder gewirkt sein. Ferner kann die Dekorschicht 3 bedruckt oder gefärbt sein. Die Dekorschicht 3 kann ebenfalls mit individuellen Designs ausgestaltet werden. Die Auftragung der Dekorschicht 3 ist erfindungswesentlich. Auf der vom Träger abgewandten Seite der Dekorschicht 3 ist eine zweite Zwischenschicht 4 aufgebracht. Diese zweite Zwischenschicht 4 besteht auf einer Harzschicht, welche durch den Zusatz von Weichmachern elastisch bzw. flexibel gehalten werden kann oder durch den Zusatz von Härtern eine hohe Steifigkeit besitzen kann. Die zweite Zwischenschicht 4 kann nur optional aufgetragen. Ferner können auch mehrere zweite Zwischenschichten 4 aufgetragen werden. Die beiden Zwischenschichten 2 und 4 müssen nicht identisch sein. Ferner ist erfindungswesentlich, dass mindestens eine Zwischenschicht 2, 4 auf der Dekorschicht 3 aufgetragen wird. Auf der zweiten Zwischenschicht 4 oder direkt auf der vom Träger abgewandten Seite der Dekorschicht wird eine Schutzschicht 5 aufgebracht. Die Schutzschicht 5 besteht aus einer Lackschicht, welche zur Versiegelung des Formteils 10 beiträgt. Die Schutzschicht 5 ist dabei die äußerste Schicht des Formteils 10. Die Aufbringung der Schutzschicht ist optional.

Ein weiterer Schnitt durch das Formteil 10 ist in Figur 2 zu sehen. Figur 2 zeigt ein Formteil 10 gemäß Figur 1 mit einer zusätzlichen Lichtquelle 6. Die Lichtquelle 6 ist dabei unterhalb des Trägers 1 an einer ersten Seite 10.1 des Formteils angeordnet. Als Lichtquelle 6 kann beispielsweise eine LED oder herkömmliche Glühbirnen und ebenfalls Leuchtfolie eingesetzt werden. Die verschiedenen Lichtquellen 6 können eingesetzt werden, um verschiedene Lichtstärkestrahlungsarten und -wellenlängen auszustrahlen. Es kann sich dabei um eine oder mehrere Lichtquellen 6 für das Formteil 10 handeln. Erfindungsgemäß ist es möglich, dass das von der Lichtquelle 6 ausgestrahlte Licht auf der gegenüberliegenden, zweiten Seite 10.2 des Formteils 10 wieder austritt. Um dies zu ermöglichen, müssen sowohl der Träger 1 als auch die verschiedenen Schichten 2, 3, 4, 5 zumindest bereichsweise transparent ausgestaltet sein. Die Dekorschicht 3 wird durch ein Zusammenwirken bzw. eine Interaktion mit mindestens einer der Zwischenschichten 2, 4 transparenter.

Der Träger 1 gemäß Figur 3 kann ebenfalls dadurch bereichsweise transparent gemacht werden, dass der Träger 1 eine oder mehrere Ausnehmungen 7 aufweist. Die Ausnehmung 7 kann entweder als Öffnung ausgebildet sein oder mit einer transparenten Substanz verschlossen sein. Durch die Ausnehmung 7 wird es ermöglicht, dass die von der Lichtquelle 6 ausgestrahlten Lichtstrahlen durch den Träger 1 hindurch strahlen können und an der zweiten Seite 10.2 zumindest teilweise austreten können. Die Größe der Ausnehmung 7 sowie deren Anzahl sind dabei variabel. Die Größe und Anzahl richtet sich optimalerweise in Verbindung mit der Stärke und der Anzahl der Lichtquellen 6 nach der gewünschten Intensität des ausgestrahlten Lichtes. Das Design der Dekorschicht 3 spielt dabei ebenfalls eine wesentliche Rolle.

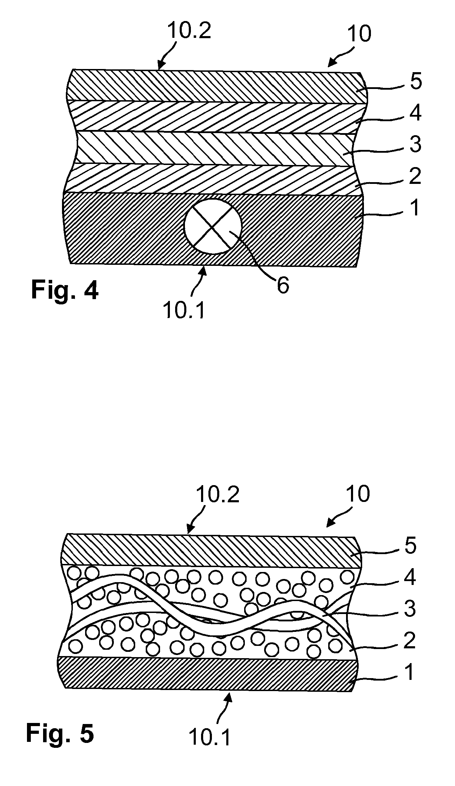

Zumindest eine Lichtquelle 6 gemäß Figur 2 und 3 kann, wie in Figur 4 gezeigt, ebenfalls in den Träger 1 integriert sein. Eine Integration der Lichtquelle 6 in den Träger 1 setzt dabei ebenfalls eine zumindest bereichsweise ausgestaltete Transparenz des Trägers voraus. Diese kann ferner über Ausnehmungen 7, wie in Figur 3 gezeigt, vorgenommen werden. Eine Integration der Lichtquelle 6 in den Träger 1 hat vorteilhafte Auswirkungen auf die Größe des Formteils 10. Durch eine integrierte Lichtquelle 6 kann dieser kompakter ausgestaltet sein.

Figur 5 zeigt ein Formteil 10 gemäß Figur 1, wobei die Zwischenschichten 2, 4 mit der Dekorschicht 3 interagieren. Durch die Beschaffenheit der Dekorschicht 3 als ein Textil oder eine textile Schicht, können die Moleküle der Zwischenschichten 2, 4, bei denen es sich um vorteilhafterweise um Harzschichten handelt, in die Dekorschicht 3 eindringen und sich mit dieser stofflich vermischen. Eine Vermischung hat zur Folge, dass die Fasern der Dekorschicht 3 vollständig von den Zwischenschichten 2, 4 umgeben werden. Durch diese Interaktion der Dekorschicht 3 mit einer oder mehrerer Zwischenschichten 2, 4 wird die Dekorschicht 3 transparenter. Ein Durchtritt der Lichtstrahlen von außerhalb der Trägerschicht 3 auf die gegenüberliegende Seite des Formteils 10 ist somit gewährleistet. Derselbe Effekt tritt ein, wenn lediglich eine der Zwischenschichten 2, 4 mit der Dekorschicht 3 interagiert.

### Bezugszeichenliste

- 1: Träger
- 2: erste Zwischenschicht
- 3: Dekorschicht
- 4: zweite Zwischenschicht
- 5: Schutzschicht
- 6: Lichtquelle
- 7: Ausnehmung
- 10: Formteil
- 10.1: erste Seite / lichteinleitende Seite
- 10.2: zweite Seite / lichtausleitende Seite

## Patentansprüche

1. Formteil (10), insbesondere für ein Kraftfahrzeug, aufweisend einen Träger (1),
mit einer Dekorschicht (3), insbesondere einem Textil oder einer textilen Schicht, welche zumindest bereichsweise auf dem Träger (1) angeordnet ist, und
mit zumindest einer Zwischenschicht (2, 4),
welche zumindest abschnittsweise auf dem Träger (1) und/oder der Dekorschicht (3) angeordnet ist, und der Träger zumindest bereichsweise lichtdurchlässig ist,
**dadurch gekennzeichnet,**
**dass** eingeleitetes Licht aus der gegenüberliegenden Seite des Formteils (10) austritt.

2. Formteil (10) nach Anspruch 1,
**dadurch gekennzeichnet,**
**dass** die Dekorschicht (3) durch die Auftragung der Zwischenschicht (2, 4) transparenter ist.

3. Formteil (10) nach Anspruch 1 und 2,
**dadurch gekennzeichnet,**
**dass** auf dem Träger (1) eine erste Zwischenschicht (2) angeordnet ist, auf welcher die Dekorschicht (3) aufbringbar ist und/oder dass zwischen der Dekorschicht (3) und der Schutzschicht (5) eine zweite Zwischenschicht (4) aufgetragen ist.

4. Formteil (10) nach einem der vorhergehenden Ansprüche,
**dadurch gekennzeichnet,**
**dass** die erste Zwischenschicht (2) und/oder die zweite Zwischenschicht (4) eine Harzschicht ist, die insbesondere in einem Fertigungsschritt auftragbar sind.

5. Formteil (10) nach einem der vorhergehenden Ansprüche,
**dadurch gekennzeichnet,**
**dass** die erste Zwischenschicht (2) eine Dicke von 0,05 bis 1 mm und oder die zweite Zwischenschicht (4) eine Dicke von 0,05 bis 1 mm aufweist.

6. Formteil (10) nach einem der vorhergehenden Ansprüche,
**dadurch gekennzeichnet,**
**dass** die Schutzschicht (5) zumindest bereichsweise auf der vom Träger (1) abgewandten Seite der Dekorschicht (3) und/oder der zweiten Zwischenschicht (4) aufgetragen ist und/ oder
**dass** die Schutzschicht (5) eine Lackschicht ist, insbesondere eine Kristalllack- und/oder eine Softlackschicht und/oder
**dass** die Schutzschicht (5) eine Dicke von 100 µm bis 1 mm aufweist.

7. Formteil (10) nach einem der vorhergehenden Ansprüche,
**dadurch gekennzeichnet,**
**dass** die Schutzschicht (5) und/oder die erste Zwischenschicht (2) und/oder die zweite Zwischenschicht (4) zumindest teilweise transparent sind.

8. Formteil (10) nach einem der vorhergehenden Ansprüche,
**dadurch gekennzeichnet,**
**dass** die Schutzschicht (5) und/oder die erste Zwischenschicht (2) und/oder die zweite Zwischenschicht (4) im ausgehärteten Zustand zumindest bereichsweise flexibel und/oder elastisch ausgebildet ist.

9. Formteil (10) nach einem der vorhergehenden Ansprüche,
**dadurch gekennzeichnet,**
**dass** die Dekorschicht (3) aus synthetischen und/oder Naturfasern besteht, wobei die Dekorschicht (3) insbesondere eine textile gewebte und/oder gewirkte Schicht ist, die insbesondere bedruckt ausgestaltet ist, und / oder
**dass** die Dekorschicht (3) bereichsweise ein- oder mehrschichtig ausgestaltet ist.

10. Formteil (10) nach einem der vorhergehenden Ansprüche,
**dadurch gekennzeichnet,**
**dass** der Träger (1) zumindest teilweise einen der folgenden Stoffe aufweist: Karbon, Metall, Kunststoff, Holz, Hartschaum und/oder
**dass** der Träger (1) vorgeformt und/oder mit einer geringen Dichte ausgestaltet ist und/oder
**dass** der Träger (1) zumindest teilweise transparent ausgestaltet ist und/oder
**dass** eine Transparenz des Formteils (10) 10 bis 90 %, vorzugsweise 30 bis 80 % und besonders bevorzugt 50 bis 75 % beträgt.

11. Formteil (10) nach einem der vorhergehenden Ansprüche,
**dadurch gekennzeichnet,**
**dass** es im Innen- und/oder im Außenbereich von Kraftfahrzeugen verbaubar ist und/oder
**dass** es im Möbelbau, insbesondere bei Leuchtmitteln, und/oder im Bauwesen anwendbar ist.

12. Formteil (10) nach einem der vorhergehenden Ansprüche,
**dadurch gekennzeichnet,**
**dass** eine Stabilität des Formteils (10) durch zumindest bereichsweises Aufbringen der ersten Zwischenschicht (2) und/oder der Dekorschicht (3) und/oder der zweiten Zwischenschicht (4) und/oder der Schutzschicht (5) verstärkt ist.

13. Formteil (10) nach einem der vorhergehenden Ansprüche,
**dadurch gekennzeichnet,**
**dass** unterhalb des Trägers (1) und/oder im Träger (1) eine Lichtquelle (6) angeordnet ist.

14. Verfahren zur Herstellung eines zumindest bereichsweise lichtdurchlässigen Formteils (10) nach einem der Ansprüche 1 bis 20, **gekennzeichnet durch** die folgenden Verfahrensschritte:
a) Aufbringen der ersten Zwischenschicht (2) auf dem Träger (1)
b) Aufbringen der Dekorschicht (3) auf dem Träger (1) oder der ersten Zwischenschicht (2)
c) Aufbringen der zweiten Zwischenschicht (4) auf der Dekorschicht (3)
d) Aufbringen der Schutzschicht (5)

15. Verfahren nach Anspruch 14,
**dadurch gekennzeichnet,**
**dass** die Verfahrensschritte a) und/oder d) optional sind
und/oder
**dass** die Reihenfolge der Verfahrensschritte variabel ausgeführt werden kann und/oder
**dass** zumindest eine Zwischenschicht im flüssigen und/oder fließfähigen Zustand aufgetragen wird.
